# EUROPEAN PATENT SPECIFICATION

(11) **EP 1 369 014 B1**
(45) Date of publication and mention of the grant of the patent: **26.03.2008**
(21) Application number: 03076272.8
(22) Date of filing: 01.05.2003
(51) Int. Cl.: A01B 79/00

(54) **A method of performing an agricultural operation, in particular crop processing, by means of an agricultural machine, and an assembly of an agricultural machine and a protecting element**
Verfahren zum Ausführen einer landwirtschaftlichen insbesondere Gewächsbearbeitung mittels einer landwirtschaftlichen Maschine und Bausatz aus landwirtschaftlicher Maschine und Schutzelement
Procédé pour exécuter une opération agricole en particulier sur une récolte au moyen d'une machine agricole et assemblage d'une machine agricole et un élément protecteur

(30) Priority: 06.06.2002 NL 1020796
(43) Date of publication of application: 10.12.2003
(73) Proprietor: Lely Enterprises AG, 6300 ZUG (CH)
(72) Inventor: de Groen, Franciscus Johannes Adrianus, 3223 ME Hellevoetsluis (NL)
(74) Representative: Corten, Maurice Jean F.M.

(56) References cited:
- DE-A- 3 445 558
- DE-A- 4 442 501
- FR-A- 2 443 189
- GB-A- 1 052 808

## Description

The invention relates to a method of performing an agricultural operation, in particular crop processing, by means of an agricultural machine, according to the preamble of claim 1.

Such a method is known from DE-A-3445558 or FR-A-7929861. In this method the agricultural machine is movable inside a fixed stable. A drawback of the known method is that the agricultural operation can be performed only in the fixed stable.

The present invention aims inter alia at providing a method not having the above-mentioned drawback.

For this purpose, according to the invention a method of the above-described type comprises the features of the characterizing part of claim 1. Thus it is possible to displace the protecting element, after the protected portion of the agricultural parcel has been processed, to a parcel portion that is still to be processed, so that the portion that is still to be processed is protected.

If the agricultural operation, in particular crop processing, is performed only in a protected portion, safety during the agricultural operation is further improved. During the performance of the agricultural operation, in particular crop processing, the protecting element is preferably not displaced.

A further improvement of safety is achieved in an embodiment of a method according to the invention in that the method comprises the step of performing an obstacle detection during the displacement of the agricultural machine or the protecting element. Thus it is possible for example to prevent a collision with an obstacle during the displacement.

In an embodiment of the method according to the invention the method comprises the step of performing, prior to the performance of the agricultural operation, in particular crop processing, an obstacle detection in the protected portion. Thus it is possible for example to stop the agricultural operation when an obstacle in the protected portion is detected, or to start the agricultural operation only when an obstacle is no longer detected.

The invention further relates to an assembly of an agricultural machine for performing an agricultural operation, in particular crop processing, comprising the features of claim 8.

The invention will be explained hereinafter in further detail with reference to embodiments shown in the drawing, in which:

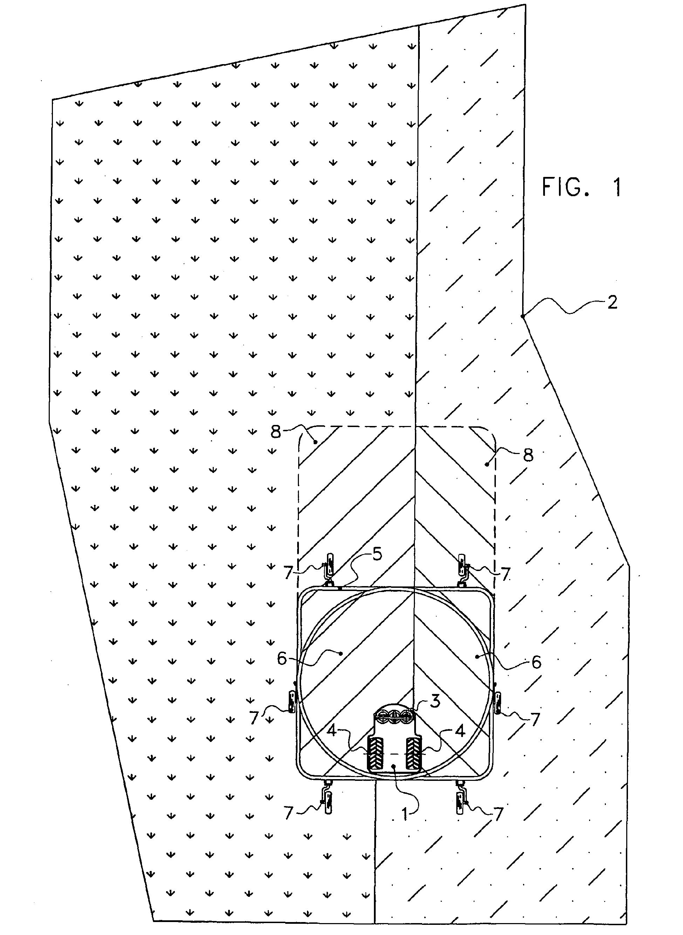

Figure 1 shows schematically in plan view an assembly of an autonomous agricultural machine and an autonomous protective cap in an agricultural parcel in an embodiment of the invention.

Figure 1 shows schematically in plan view an autonomous agricultural machine 1 in an agricultural parcel 2 in an embodiment of the invention. It is pointed out here that an autonomous machine, i.e. a machine that does not require a driver for being moved, is known per se and will not be set out here in further detail for the sake of simplicity of the description. The autonomous agricultural machine 1 is suitable for performing crop-processing on a crop that is present on the agricultural parcel 2. In the embodiment shown the autonomous agricultural machine 1 is an autonomous mowing machine that mows crop that is present on the agricultural parcel 2 by means of a mowing unit 3. Although several sorts of mowing units known per se may be used, in the embodiment shown the mowing unit 3 is constituted by mowing discs that are present on a cutter bar and are rotatable about an axis, which mowing discs are provided with mowing knives. It will be obvious that the agricultural machine can also be an agricultural machine for performing other crop-processing operations.

The agricultural machine 1 is supported and displaced over the agricultural parcel 2 by means of wheels 4. The autonomous agricultural machine 1 further comprises a known per se (non-shown) route-information system that is provided with a memory for containing position data with respect to the agricultural parcel 2. The data may be stored for example in the form of a ground plan. The route-information system further comprises a (non-shown) position-determining element for determining the position of the autonomous agricultural machine 1 in the agricultural parcel 2. It is thus possible for the autonomous agricultural machine 1 to move autonomously over the agricultural parcel with the aid of data from the route-information system.

Figure 1 further shows schematically in plan view an autonomously moving protecting element, for example a protective cap or fencing 5, for example a cupola made of impenetrable material, in the agricultural parcel 2. The protective cap 5 is disposed over a first portion of the agricultural parcel 2 and thus forms a first protected portion 6 (shown as shaded portion) of the agricultural parcel 2. The protective cap 5 is suitable for containing the autonomous agricultural machine 1. The protective cap 5 is supported and autonomously displaced over the agricultural parcel 2 with the aid of wheels 7. The protective cap 5 further comprises a known per se (non-shown) route-information system provided with a memory for containing position data with respect to the agricultural parcel 2. The data may be stored for example in the form of a ground plan. The route-information system further comprises a (non-shown) position-determining element for determining the position of the protective cap 5 in the agricultural parcel 2 by means of for example a GPS-system. The route-information systems of the agricultural machine and the protective cap are in particular capable of being linked (for example in an electro-magnetic manner) for the purpose of correctly moving relative to each other. The position-determining systems can also be used as displacement detectors.

For performing the agricultural operation the agricultural machine 1 moves inside the protected portion 6 of the agricultural parcel 2. When the protected portion 6 has totally been processed, the mowing-unit is deactivated. After complete deactivation, which can be detected and transmitted in an electronic manner, the protective cap 5 is autonomously moved to a second portion 8 of the agricultural parcel 2, so that a second protected portion is formed there. The agricultural machine 1 can simultaneously move along with the protective cap, or can be displaced only after the protective cap has reached the second portion. In the latter case the protective cap should have a (closable) passage for the agricultural machine.

The agricultural operation is subsequently performed on the second, then protected portion 8 of the agricultural parcel. Thus the entire agricultural parcel can be processed in a manner in which the agricultural operation, in particular crop processing, is performed only in a protected portion.

During the performance of the agricultural operation, in particular crop processing, the protective cap is preferably not displaced.

An obstacle detection known per se for detecting an obstacle is performed during the displacement of the agricultural machine 1 or the protective cap 5 for preventing an undesired collision with an obstacle. The obstacle detection may for example be used for changing the direction of displacement or for stopping the displacement or, in the case that the obstacle is a human being or an animal, for giving a perceptible sound signal.

Such an obstacle detection inside the protective cap 5 precedes the performance of the agricultural operation. Said obstacle detection can be used for starting or stopping the agricultural operation, or for generating a warning. It is pointed out here that a warning can also be transmitted remotely to the owner of the parcel or other parties concerned.

## Claims

1. A method of performing an agricultural operation, in particular crop processing, by means of an agricultural machine (1), which method comprises the step of displacing the agricultural machine (1) over an agricultural parcel, the method comprising successively the steps of:
- forming a first protected portion of the agricultural parcel by disposing a protecting element (5) around a first portion of the agricultural parcel, and
- autonomously displacing the agricultural machine (1) inside the protected portion of the agricultural parcel for performing the agricultural operation, in particular crop processing, during the displacement,
**characterized in that** the method comprises the step of forming a second protected portion of the agricultural parcel by autonomously displacing the protecting element (5) from the first portion of the agricultural parcel to a second portion of the agricultural parcel, the protecting element (5) and the agricultural machine (1) being adapted so that the agricultural machine (1) is capable of being displaced to the second portion after the protecting element (5) has reached the second portion.

2. Method as claimed in claim 1 **characterized in that** the agricultural machine (1) is capable of being displaced simultaneously along with the protecting element (5).

3. Method as claimed in claim 1 or 2 **characterized in that** the protecting element (5) and the agricultural machine (1) are adapted so that the agricultural machine (1) is capable of being displaced to the second portion only after the protecting element (5) has reached the second portion.

4. A method as claimed in any one of the preceding claims, **characterized in that** the agricultural operation, in particular crop processing, is performed only in a protected portion.

5. A method as claimed in any one of the preceding claims, **characterized in that** during the performance of the agricultural operation, in particular crop processing, the protecting element (5) is not displaced.

6. A method as claimed in any one of the preceding claims, **characterized in that the** method comprises the step of performing an obstacle detection during the displacement of the agricultural machine (1) or the protecting element (5).

7. A method as claimed in any one of the preceding claims, **characterized in that** the method comprises the step of performing, prior to the performance of the agricultural operation, in particular crop processing, an obstacle detection in the protected portion.

8. An assembly of an agricultural machine (1) for performing an agricultural operation, in particular crop processing, which agricultural machine (1) is autonomously displaceable over an agricultural parcel, the agricultural machine (1) being provided with an agricultural device for performing the agricultural operation, and with a protecting element (5) for forming a protected portion of the agricultural parcel, the agricultural machine (1) being displaceable only over the protected portion during the performance of the agricultural operation, **characterized in that** the protecting element (5) is a protecting element that is autonomously displaceable over the agricultural parcel, the protecting element (5) and the agricultural machine (1) being adapted so that the agricultural machine (1) is capable of being displaced to the second portion after the protecting element (5) has reached the second portion.

9. Assembly as claimed in claim 8 **characterized in that** the agricultural machine (1) is capable of being displaced simultaneously along with the protecting element (5).

10. Assembly as claimed in claim 8 or 9 **characterized in that** the protecting element (5) and the agricultural machine (1) are adapted so that the agricultural machine (1) is capable of being displaced to the second portion only after the protecting element (5) has reached the second portion.

## Patentansprüche

1. Verfahren zum Durchführen einer landwirtschaftlichen Tätigkeit, insbesondere einer Gutaufbereitung, mit Hilfe einer landwirtschaftlichen Maschine (1), wobei das Verfahren den Verfahrensschritt des Verlagerns der landwirtschaftlichen Maschine (1) auf einer landwirtschaftlichen Parzelle umfasst, und wobei das Verfahren nacheinander die folgenden Verfahrensschritte umfasst:
- Bilden eines ersten geschützten Abschnittes der landwirtschaftlichen Parzelle durch Anordnen eines Schutzelements (5) um einen ersten Abschnitt der landwirtschaftlichen Parzelle und
- autonomes Verlagern der landwirtschaftlichen Maschine (1) innerhalb des geschützten Abschnittes der landwirtschaftlichen Parzelle zum Durchführen der landwirtschaftlichen Tätigkeit, insbesondere der Gutaufbereitung, während der Verlagerung,
**dadurch gekennzeichnet, dass** das Verfahren den Verfahrensschritt des Bildens eines zweiten geschützten Abschnittes der landwirtschaftlichen Parzelle durch autonomes Verlagern des Schutzelements (5) von dem ersten Abschnitt der landwirtschaftlichen Parzelle zu einem zweiten Abschnitt der landwirtschaftlichen Parzelle umfasst, wobei das Schutzelement (5) und die landwirtschaftliche Maschine (1) derart ausgebildet sind, dass die landwirtschaftliche Maschine (1) zu dem zweiten Abschnitt verlagert werden kann, nachdem das Schutzelement (5) den zweiten Abschnitt erreicht hat.

2. Verfahren nach Anspruch 1,
**dadurch gekennzeichnet, dass** die landwirtschaftliche Maschine (1) simultan mit dem Schutzelement (5) verlagert werden kann.

3. Verfahren nach Anspruch 1 oder 2,
**dadurch gekennzeichnet, dass** das Schutzelement (5) und die landwirtschaftliche Maschine (1) derart ausgebildet sind, dass die landwirtschaftliche Maschine (1) erst dann zu dem zweiten Abschnitt verlagert werden kann, wenn das Schutzelement (5) den zweiten Abschnitt erreicht hat.

4. Verfahren nach einem der vorhergehenden Ansprüche,
**dadurch gekennzeichnet, dass** die landwirtschaftliche Tätigkeit, insbesondere die Gutaufbereitung, nur in einem geschützten Abschnitt durchgeführt wird.

5. Verfahren nach einem der vorhergehenden Ansprüche,
**dadurch gekennzeichnet, dass** das Schutzelement (5) während der Durchführung der landwirtschaftlichen Tätigkeit, insbesondere der Gutaufbereitung, nicht verlagert wird.

6. Verfahren nach einem der vorhergehenden Ansprüche,
**dadurch gekennzeichnet, dass** das Verfahren den Verfahrensschritt des Durchführens einer Hindernisdetektion während der Verlagerung der landwirtschaftlichen Maschine (1) oder des Schutzelements (5) umfasst.

7. Verfahren nach einem der vorhergehenden Ansprüche,
**dadurch gekennzeichnet, dass** das Verfahren den Verfahrensschritt des Durchführens einer Hindernisdetektion auf dem geschützten Abschnitt vor dem Durchführen der landwirtschaftlichen Tätigkeit, insbesondere der Gutaufbereitung, umfasst.

8. Anordnung einer landwirtschaftlichen Maschine (1) zum Durchführen einer landwirtschaftlichen Tätigkeit, insbesondere einer Gutaufbereitung, wobei die landwirtschaftliche Maschine (1) auf einer landwirtschaftlichen Parzelle autonom verlagert werden kann, wobei die landwirtschaftliche Maschine (1) mit einer landwirtschaftlichen Vorrichtung zum Durchführen der landwirtschaftlichen Tätigkeit und mit einem Schutzelement (5) zum Bilden eines geschützten Abschnittes der landwirtschaftlichen Parzelle versehen ist, wobei die landwirtschaftliche Maschine (1) während der Durchführung der landwirtschaftlichen Tätigkeit nur auf dem geschützten Abschnitt verlagert werden kann,
**dadurch gekennzeichnet, dass** das Schutzelement (5) ein Schutzelement ist, das auf der landwirtschaftlichen Parzelle autonom verlagert werden kann, wobei das Schutzelement (5) und die landwirtschaftliche Maschine (1) derart ausgebildet sind, dass die landwirtschaftliche Maschine (1) zu dem zweiten Abschnitt verlagert werden kann, nachdem das Schutzelement (5) den zweiten Abschnitt erreicht hat.

9. Anordnung nach Anspruch 8,
**dadurch gekennzeichnet, dass** die landwirtschaftliche Maschine (1) simultan mit dem Schutzelement (5) verlagert werden kann.

10. Anordnung nach Anspruch 8 oder 9,
**dadurch gekennzeichnet, dass** das Schutzelement (5) und die landwirtschaftliche Maschine (1) derart ausgebildet sind, dass die landwirtschaftliche Maschine (1) erst dann zu dem zweiten Abschnitt verlagert werden kann, wenn das Schutzelement (5) den zweiten Abschnitt erreicht hat.

## Revendications

1. Procédé pour exécuter une opération agricole, en particulier sur une récolte, au moyen d'une machine agricole (1), lequel procédé comprend l'étape consistant à déplacer la machine agricole (1) sur une parcelle agricole, le procédé comprenant successivement les étapes consistant à :
- former une première portion protégée de la parcelle agricole en disposant un élément protecteur (5) autour d'une première portion de la parcelle agricole, et
- déplacer de manière autonome la machine agricole (1) à l'intérieur de la portion protégée de la parcelle agricole pour exécuter l'opération agricole, en particulier sur une récolte, durant le déplacement, **caractérisé en ce que** le procédé comprend les étapes consistant à former une deuxième portion protégée de la parcelle agricole en déplaçant de manière autonome l'élément protecteur (5) de la première portion de la parcelle agricole à une deuxième portion de la parcelle agricole, l'élément protecteur (5) et la machine agricole (1) étant adaptés de manière que la machine agricole (1) soit en mesure d'être déplacée à la deuxième portion après que l'élément protecteur (5) a atteint la deuxième portion.

2. Procédé selon la revendication 1, **caractérisé en ce que** la machine agricole (1) est en mesure d'être déplacée simultanément conjointement à l'élément protecteur (5).

3. Procédé selon la revendication 1 ou 2, **caractérisé en ce que** l'élément protecteur (5) et la machine agricole (1) sont adaptés de manière que la machine agricole (1) soit en mesure d'être déplacée à la deuxième portion seulement après que l'élément protecteur (5) a atteint la deuxième portion.

4. Procédé selon l'une quelconque des revendications précédentes, **caractérisé en ce que** l'opération agricole, en particulier sur une récolte, est exécutée seulement dans une portion protégée.

5. Procédé selon l'une quelconque des revendications précédentes, **caractérisé en ce que** durant l'exécution de l'opération agricole, en particulier sur une récolte, l'élément protecteur (5) n'est pas déplacé.

6. Procédé selon l'une quelconque des revendications précédentes, **caractérisé en ce que** le procédé comprend l'étape consistant à effectuer une détection d'obstacle durant le déplacement de la machine agricole (1) ou de l'élément protecteur (5).

7. Procédé selon l'une quelconque des revendications précédentes, **caractérisé en ce que** le procédé comprend l'étape consistant à effectuer, avant l'exécution de l'opération agricole, en particulier sur une récolte, une détection d'obstacle dans la portion protégée.

8. Assemblage d'une machine agricole (1) pour exécuter une opération agricole, en particulier sur une récolte, laquelle machine agricole (1) est déplaçable de manière autonome sur une parcelle agricole, la machine agricole (1) étant équipée d'un dispositif agricole pour exécuter l'opération agricole et d'un élément protecteur (5) pour former une portion protégée de la parcelle agricole, la machine agricole (1) étant déplaçable seulement sur la portion protégée durant l'exécution de l'opération agricole, **caractérisé en ce que** l'élément protecteur (5) est un élément protecteur qui est déplaçable de manière autonome sur la parcelle agricole, l'élément protecteur (5) et la machine agricole (1) étant adaptés de manière que la machine agricole (1) soit en mesure d'être déplacée à la deuxième portion après que l'élément protecteur (5) a atteint la deuxième portion.

9. Assemblage selon la revendication 8, **caractérisé en ce que** la machine agricole (1) est en mesure d'être déplacée simultanément conjointement à l'élément protecteur (5).

10. Assemblage selon la revendication 8 ou 9, **caractérisé en ce que** l'élément protecteur (5) et la machine agricole (1) sont adaptés de manière que la machine agricole (1) soit en mesure d'être déplacée à la deuxième portion seulement après que l'élément protecteur (5) a atteint la deuxième portion.
